# EUROPEAN PATENT SPECIFICATION

(11) **EP 2 073 633 B1**
(45) Date of publication and mention of the grant of the patent: **13.02.2013**
(21) Application number: 07828654.9
(22) Date of filing: 20.09.2007
(51) Int. Cl.: A01N 25/04, A01N 25/02, A01N 51/00, A01N 47/36, A01N 43/84, A01N 43/56, A01P 1/00, A01P 7/04, A01P 13/00

(54) **AGROCHEMICAL COMPOSITION COMPRISING AS SOLVENT A MIXTURE OF AN AROMATIC HYDROCARBON, PROPYLENE GLYCOL DIACETATE, AND 1,3-DIMETHYL-2-IMIDAZOLIDINONE**
AGROCHEMISCHE ZUSAMMENSETZUNG UMFASSEND ALS LÖSUNGSMITTEL EIN GEMISCH AUS EINEM AROMATISCHEN KOHLENWASSERSTOFF, PROPYLENGLYCOL-DIACETAT UND 1,3-DIMETHYL-2-IMIDAZOLIDINON
COMPOSITION AGROCHIMIQUE COMPRENANT UN MELANGE D`HYDROCARBURE AROMATIQUE, DE DIACETATE DE PROPYLENE GLYCOL ET DE 1,3-DIMETHYL-2-IMIDAZOLIDINONE EN TANT QUE SOLVANT

(30) Priority: 27.09.2006 JP 2006262136
(43) Date of publication of application: 01.07.2009
(73) Proprietor: Sumitomo Chemical Company, Limited, Tokyo 104-8260 (JP)
(72) Inventor: KOZUKI, Yumiko, Takarazuka-shi Hyogo 665-0836 (JP)
(74) Representative: Vossius & Partner
(86) International application number: PCT/JP2007/068911
(87) International publication number: WO 2008/047570

(56) References cited:
- DE-A1-102006 013 998
- US-A1- 2003 083 201
- DATABASE WPI Week 200573 Thomson Scientific, London, GB; AN 2005-714442 XP002502686 & WO 2005/096815 A (NIPPON KAYAKU KK) 20 October 2005 (2005-10-20)
- DATABASE WPI Week 200354 Thomson Scientific, London, GB; AN 2003-572654 XP002502687 & JP 2003 089603 A (KUMIAI CHEM IND CO LTD) 28 March 2003 (2003-03-28)

## Description

The present invention relates to an emulsion composition containing a plurality of organic solvents.

An emulsion is one form of an agrochemical preparation prepared by dissolving an active agrochemical compound in an organic solvent and adding a surfactant therein. An emulsion composition comprising a plurality of organic solvents has been studied for improving physical stability of the composition as such and an aqueous dilution thereof (see, for example, JP-A 2004-523491 and JP-A 2002-501087).

US 2003/0083201 relates to a pesticidal emulsifiable concentrate composition that contains a phenoxy propionate herbicide, a polar solvent, a non polar solvent and a surfactant.

In general, an emulsion composition of an active agrochemical compound is diluted with water before application and is applied in the form of an aqueous dilution thereof. One object of the present invention is to provide an emulsion composition which can maintain a stable emulsified state in the form of an aqueous dilution thereof.

This object as well as other objects and advantages of the present invention will be apparent to those skilled in the art from the following description.

That is, the present invention provides:
1. An emulsion composition essentially consisting of:
   0.5 to 25% by weight of one or a plurality of hydrophobic active agrochemical compounds having a solubility in wakes at pH 7.0 and 25°C of lower than 1000 ppm,
   5 to 15% by weight of one or a plurality of surfactants,
   2 to 60% by weight of one or a plurality of aromatic hydrocarbon solvents,
   2 to 60% by weight of propylene glycol diacetate,
   12 to 90% by weight of 1,3-dimethyl-2-imidazolidinone, and
   0 to 5% by weight of one or a plurality of formulation auxiliaries,
      wherein a weight ratio of 1,3-dimethyl-2-imidazolidinone and the aromatic hydrocarbon solvent(s) is 1 : 0.03 to 1 : 2.0, and
      a weight ratio of 1,3-dimethyl-2-imidazolidinone and propylene glycol diacetate is 1 : 0.03 to 1 : 2.0 (hereinafter, sometimes, referred to as the present emulsion composition);
2. The emulsion composition according to the above item 1, wherein the weight ratio of 1,3-dimethyl-2-imidazolidinone and the aromatic hydrocarbon solvent(s) is 1 : 0.05 to 1 : 1.5;
3. The emulsion composition according to the above item 1 or 2, wherein the weight ratio of 1,3-dimethyl-2-imidazolidinone and propylene glycol diacetate is 1 : 0.05 to 1 : 1.5:
4. The emulsion composition according to any one of the above items 1 to 3, wherein the surfactant(s) are selected from the group consisting of anionic surfactants and nonionic surfactants;
5. The emulsion composition according to the above item 4, wherein the anionic surfactant is an alkylarylsulfonate;
6. The emulsion composition according to any one of the above items 1 to 5, wherein the hydrophobic active agrochemical compound is a neonicotinoid insecticidal compound;
7. The emulsion composition according to any one of the above items 1 to 5, wherein the hydrophobic active agrochemical compound is a sulfonylurea herbicidal compound or a dicarboxyimide herbicidal compound;
8. A solvent for agrochemical compounds consisting of one or a plurality of aromatic hydrocarbon solvents, propylene glycol diacetate, and 1,3-dimethyl-2-imidazolidinone,
   wherein a weight ratio of 1,3-dimethyl-2-imidazolidinone and the aromatic hydrocarbon solvent(s) is 1 : 0.03 to 1 : 2.0, and
   a weight ratio of 1,3-dimethyl-2-imidazolidinone and propylene glycol diacetate is 1 : 0.03 to 1 : 2.0;
9. A 10 to 5000-fold aqueous dilution of the emulsion composition according to any one of the above items 1 to 7;
10. Use of a solvent consisting of one or a plurality of aromatic hydrocarbon solvents, propylene glycol diacetate and 1,3-dimethyl-2-imidazolidinone for dissolving active agrochemical compounds having a solubility in waker at pH 7.0 and 25°C of lower than 1000 ppm, wherein a weight ratio of 1,3-dimethyl-2-imidazolidinone and the aromatic hydrocarbon solvent(s) is 1 : 0.03 to 1 : 2.0, and a weight ratio of 1,3-dimethyl-2-imidazolidinone and propylene glycol diacetate is 1 : 0.03 to 1 : 2.0; and the like.

The present emulsion composition has good stability under low temperature conditions, and also has good stability in the form of an aqueous dilution thereof.

The expression "the aromatic hydrocarbon solvent(s)" used herein means an aromatic hydrocarbon solvent in case of using one solvent as well as aromatic hydrocarbon solvents in case of using a plurality of solvents.

Likewise, the expression "the surfactant(s)" means a surfactant in case of using one surfactant as well as surfactants in case of using a plurality of surfactants.

The expression "the hydrophobic active agrochemical compound(s)" means a hydrophobic active agrochemical compound in case of using one agrochemical compound as well as hydrophobic active agrochemical compounds in case of using a plurality of agrochemical compounds.

The expression "the formulation auxiliary(ies)" means a formulation auxiliary in case of using one formulation auxiliary as well as formulation auxiliaries in case of using a plurality of formulation auxiliaries.

The hydrophobic active agrochemical compound used in the present invention is an active agrochemical compound having a solubility in water at pH 7.0 and 25°C of lower than 1000 ppm, and may be in the form of a solid or a liquid at 25°C. Examples of the active agrochemical compound include a herbicidal compound, a bactericidal compound, an insecticidal compound, a miticidal compound and a plant growth controlling compound, and specific examples thereof include the following compounds.

Examples of the herbicidal compound include dicarboxyimide herbicidal compounds (a group of herbicidal compounds having 4,5,6,7-tetrahydro-1H-isoindol-1,3-(2H)-dione structure within a molecule), such as flumiclorac pentyl (the herbicidal compound 1), flumioxazin (the herbicidal compound 2), cinidon-ethyl (the herbicidal compound 3) and the like;
pyridazinone herbicidal compounds, such as flufenpyrethyl (the herbicidal compound 4), brompyrazon (the herbicidal compound 5) and the like;
uracil herbicidal compounds, such as butafenacil (the herbicidal compound 6), bromacil (the herbicidal compound 7), flupropacil (the herbicidal compound 8), benzfendizone (the herbicidal compound 9) and the like;
triazolone herbicidal compounds, such as carfentrazone ethyl (the herbicidal compound 10), sulfentrazone (the herbicidal compound 11) and the like;
diphenyl ether herbicidal compounds, such as lactofen (the herbicidal compound 12), bifenox (the herbicidal compound 13), chloronitrophenone (the herbicidal compound 14), chlomethoxynil (the herbicidal compound 15) and the like;
sulfonylurea herbicidal compounds (a group of herbicidal compounds having sulfonylurea structure within a molecule), such as sulfosulfuron (the herbicidal compound 16), imazosulfuron (the herbicidal compound 17), nicosulfuron (the herbicidal compound 18),
primisulfuronmethyl (the herbicidal compound 19), rimsulfuron (the herbicidal compound 20), halosulfuronmethyl (the herbicidal compound 21), prosulfuron (the herbicidal compound 22), thifensulfuronmethyl (the herbicidal compound 23) and the like;
phenoxypropionic acid herbicidal compounds, such as chlorazifop (the herbicidal compound 24), diclofop (the herbicidal compound 25), fluazifop (the herbicidal compound 26) and the like;
triazolopyrimidine herbicidal compounds, such as diclosulam (the herbicidal compound 27), cloransulam (the herbicidal compound 28), flumetsulam (the herbicidal compound 29), penoxsulam (the herbicidal compound 30), piroxsulam (the herbicidal compound 31), metosulam (the herbicidal compound 32) and the like;
anilide herbicidal compounds, such as picolinafen (the herbicidal compound 33), flufenacet (the herbicidal compound 34), mefenacet (the herbicidal compound 35) and the like;
triazine herbicidal compounds, such as atrazine (the herbicidal compound 36), metribuzin (the herbicidal compound 37) and the like;
urea herbicidal compounds, such as fluometuron (the herbicidal compound 38), isoproturon (the herbicidal compound 39), daimuron (the herbicidal compound 40) and the like;
imidazoline herbicidal compounds, such as imazapyr (the herbicidal compound 41), imazaquin (the herbicidal compound 42), imazethapyr (the herbicidal compound 43) and the like;
chloroacetamide herbicidal compounds, such as pretilachlor (the herbicidal compound 44), butachlor (the herbicidal compound 45) and the like;
thiolcarbamate herbicidal compounds, such as benthiocarb (the herbicidal compound 46), esprocarb (the herbicidal compound 47), molinate (the herbicidal compound 48) and the like;
amide herbicidal compounds, such as bromobutide (the herbicidal compound 49), propanil (the herbicidal compound 50), cafenstrole (the herbicidal compound 51) and the like;
benzoyl pyrazole herbicidal compounds, such as pyrazoxyfen (the herbicidal compound 52), benzofenap (the herbicidal compound 53) and the like;
methyl {2-chloro-4-fluoro-5-[5,6,7,8-tetrahydro-3-oxo-1H,3H-[1,3,4]thiadiazolo[3,4-a]pyridazine-1-ylideneamino]phenylthio}acetate (the herbicidal compound 54),
N-benzyl-2-(α,α,α,4-tetrafluoro-m-trioxy)butylamide (the herbicidal compound 55), and
2-(2,4-dichloro-5-prop-2-ynyloxyphenyl)-5,6,7,8-tetrahydro-1,2,4-triazolo[4,3-a]pyridin-3(2H)-one (the herbicidal compound 56).

Examples of the bactericidal compound include azole bactericidal compounds, such as propiconazole (the bactericidal compound 1), triadimenol (the bactericidal compound 2), prochloraz (the bactericidal compound 3), penconazole (the bactericidal compound 4), tebconazole (the bactericidal compound 5), flusilazole (the bactericidal compound 6), diniconazole (the bactericidal compound 7), bromoconazole (the bactericidal compound 8), epoxyconazole (the bactericidal compound 9), difenoconazole (the bactericidal compound 10), cyproconazole (the bactericidal compound 11), metconazole (the bactericidal compound 12), triflumizole (the bactericidal compound 13), tetraconazole (the bactericidal compound 14), myclobutanil (the bactericidal compound 15), fenbuconazole (the bactericidal compound 16), hexaconazole (the bactericidal compound 17), fluquinconazole (the bactericidal compound 18), triticonazole (the bactericidal compound 19), bitertanol (the bactericidal compound 20), imazalil (the bactericidal compound 21), flutriafol (the bactericidal compound 22) and the like;
morpholine bactericidal compounds, such as fenpropimorph (the bactericidal compound 23), tridemorph (the bactericidal compound 24), fenpropimorph (the bactericidal compound 25), dimethomorph (the bactericidal compound 26) and the like;
benzimidazole bactericidal compounds, such as carbendazim (the bactericidal compound 27), benomyl (the bactericidal compound 28), thiabendazole (the bactericidal compound 29), thiophanate methyl (the bactericidal compound 30) and the like;
strobilurin bactericidal compounds, such as azoxystrobin (the bactericidal compound 31), trifloxystrobin (the bactericidal compound 32), picoxystrobin (the bactericidal compound 33), pyraclostrobin (the bactericidal compound 34), dimoxystrobin (the bactericidal compound 35), fluoxastrobin (the bactericidal compound 36), metominostrobin (the bactericidal compound 37), orysastrobin (the bactericidal compound 38) and the like;
dicarboxyimide bactericidal compounds, such as procymidone (the bactericidal compound 39), iprodione (the bactericidal compound 40), vinclozolin (the bactericidal compound 41) and the like;
carboxyamide bactericidal compounds, such as furametpyr (the bactericidal compound 42), mepronil (the bactericidal compound 43), flutolanil (the bactericidal compound 44), trifluzamide (the bactericidal compound 45) and the like;
anilinopyrimidine bactericidal compounds, such as cyprodinil (the bactericidal compound 46), pyrimethanil (the bactericidal compound 47), mepanipyrim (the bactericidal compound 48) and the like;
phenylpyrrole bactericidal compounds, such as fenpiclonil (the bactericidal compound 49), fludioxonil (the bactericidal compound 50) and the like;
carbamate bactericidal compounds, such as iprovalicarb (the bactericidal compound 51), benthiavalicarb (the bactericidal compound 52), diethofencarb (the bactericidal compound 53) and the like;
pyridine bactericidal compounds, such as boscalid (the bactericidal compound 54), fluazinam (the bactericidal compound 55) and the like;
(Z)-2'-methylacetophenone 4,6-dimethylpyrimidine-2-ylhydrazone,
1-(methoxycarbonyl)-2-(1-methylethyl)-4-(2,6-dichlorophenyl)-5-amino-1H-pyrazole-3-one (the bactericidal compound 56),
1-[(ethylthio)carbonyl]-2-(1-methylethyl)-4-(2,6-dichlorophenyl)-5-amino-1H-pyrazole-3-one (the bactericidal compound 57),
1-[(2-propenylthio)carbonyl]-2-(1-methylethyl)-4-(2-methylphenyl)-5-amino-1H-pyrazole-3-one (the bactericidal compound 58),
5-methyl-1,2,4-triazolo-[3,4,-b][1,3]benzothiazole (the bactericidal compound 59),
1,2,5,6-tetrahydropyrrolo[3,2,1-ij]quinoline-4-one, and
3-allyloxy-1,2-benzothiazole 1,1-dioxide (the bactericidal compound 60).

Examples of the insecticidal active compound and/or the miticidal compound include organic phosphorus insecticidal compounds, such as fenitrothion (the insecticidal compound 1), diazinon (the insecticidal compound 2), chlorpyrifos (the insecticidal compound 3) and the like;
carbamate insecticidal compounds, such as benfuracarb (the insecticidal compound 4), propoxur (the insecticidal compound 5), carbosulfan (the insecticidal compound 6), carbaryl (the insecticidal compound 7), aldicarb (the insecticidal compound 8), fenothiocarb (the insecticidal compound 9) and the like;
pyrethroid insecticidal compounds, such as etofenprox (the insecticidal compound 10), fenvalerate (the insecticidal compound 11), esfenvalerate (the insecticidal compound 12), fenpropathrin (the insecticidal compound 13), cypermethrin (the insecticidal compound 14), permethrin (the insecticidal compound 15), cyhalothrin (the insecticidal compound 16), deltamethrin (the insecticidal compound 17), cycloprothrin (the insecticidal compound 18), fluvalinate (the insecticidal compound 19), bifenthrin (the insecticidal compound 20), halfenprox (the insecticidal compound 21), tralomethrin (the insecticidal compound 22), silafluofen (the insecticidal compound 23), d-phenothrin (the insecticidal compound 24), cyphenothrin (the insecticidal compound 25), d-resmethrin (the insecticidal compound 26), acrinathrin (the insecticidal compound 27), cyfluthrin (the insecticidal compound 28), tefluthrin (the insecticidal compound 29), transfluthrin (the insecticidal compound 30), tetramethrin (the insecticidal compound 31), allethrin (the insecticidal compound 32), prallethrin (the insecticidal compound 33), empenthrin (the insecticidal compound 34), imiprothrin (the insecticidal compound 35), d-furamethrin (the insecticidal compound 36) and the like;
neonicotinoid insecticidal compounds, such as clothianidin (the insecticidal compound 37), imidacloprid (the insecticidal compound 38), thiamethoxam (the insecticidal compound 39), thiacloprid (the insecticidal compound 40) and the like;
benzoylphenylurea insecticidal compounds, such as chlorfluazuron (the insecticidal compound 41), teflubenzuron (the insecticidal compound 42), flufenoxuron (the insecticidal compound 43), bistrifluron (the insecticidal compound 44), buprofezin (the insecticidal compound 45), triflumuron (the insecticidal compound 46) and the like;
pyrazole insecticidal compounds, such as acetoprole (the insecticidal compound 47), ethiprole (the insecticidal compound 48), fipronil (the insecticidal compound 49), pyraclofos (the insecticidal compound 50) and the like;
juvenile hormone insecticidal compounds, such as pyriproxyfen (the insecticidal compound 51), fenoxycarb (the insecticidal compound 52) and the like;
(RS)-5-tertiary-butyl-2-[2-(2,6-difluorophenyl)-4,5-dihydro-1,3-oxazol-4-yl]phenetole (the insecticidal compound 53), and
2,6-dichloro-4-(3,3-dichloroallyloxy)phenyl 3-[5-(trifluoromethyl)-2-pyridyloxy]propyl ether (the insecticidal compound 54).

Examples of a plant growth controlling compound include azole plant growth controlling compounds, such as uniconazole-P (the plant growth controlling compound 1), paclobutrazol (the plant growth controlling compound 2) and the like; and
(RS)-4'-chloro-2'-(α-hydroxybenzyl)isonicotinanilide (the plant growth controlling compound 3).

The above-mentioned active agrochemical compounds are described in a known literature such as The Pesticide Manual, 13^{th} edition (published by 1987, The British Crop Protection Council) or the like.

The present emulsion composition contains one or a plurality of hydrophobic active agrochemical compounds. The total amount of the hydrophobic active agrochemical compound(s) contained in the present emulsion composition is in a range of 0.5 to 25% by weight, preferably 0.5 to 15% by weight.

The surfactant used in the present invention may be an anionic surfactant, a nonionic surfactant or a cationic surfactant. Preferably the surfactant is selected from the group consisting of anionic surfactants and nonionic surfactants. More preferably the surfactant is a combination of an anionic surfactant(s) and a nonionic surfactant(s), and a weight ratio of the anionic surfactant(s) and the nonionic surfactant(s) is preferably in a range of 1 : 0.1 to 1 : 10.

Examples of the anionic surfactant include alkylarylsulfonate such as dodecylbenzenesulfonate, polyoxyethylene(poly)arylaryl ether sulfate such as polyoxyethylenedistyrylphenyl ether sulfate, polyoxyethylene(poly)arylaryl ether phosphate such as polyoxyethylenetristyrylphenyl ether phosphate, polyoxyethylenealkylarylphosphate, and polyoxyethylenealkylphosphate. Preferred is alkylarylsulfonate, particularly dodecylbenzenesulfonate. More preferred is sodium or potassium alkylarylsulfonate, particularly sodium or potassium dodecylbenzenesulfonate.

In general, examples of a salt of sulfonate, sulfate or phosphate include a sodium salt, a potassium salt and an ammonium salt.

As the dodecylbenzenesulfonate, a commercially available surfactant such as Rhodacal 70, Rhodacal 70/B or Rhodacal 60/BE (all manufactured by Rhodia Nicca) can be used. As the polyoxyethylenedistyrylphenyl ether sulfate, a commercially available surfactant such as Soprophor DSS/7 (manufactured by Rhodia Nicca) can be used. As the polyoxyethylenetristyrylphenyl ether phosphate, a commercially available surfactant such as Soprophor FLK (manufactured by Rodia Nicca) can be used. As the polyoxyethylenealkylarylphosphate, a commercially available surfactant such as Rhodafac PS/17 (manufactured by Rhodia Nicca) can be used. As the polyoxyethylenealkylphosphate, a commercially available surfactant such as Rhodafac MB (manufactured by Rhodia Nicca) can be used.

Examples of the nonionic surfactant include polyoxyethylene polyoxypropylene block polymers, fatty acid esters of polyoxyethylene polyoxypropylene block polymers, polyoxyethylene polyoxypropylene alkyl ethers, polyoxyethylene polyoxypropylene polyaryl ethers, polyoxyethylene polyoxypropylene alkyl aryl ethers, polyoxyethylene alkyl aryl ethers, polyoxyethylene polyaryl ethers, polyoxyethylene vegetable oils such as polyoxyethylene castor oils, polyoxyethylene hardened vegetable oils such as polyoxyethylene hardened castor oils, polyoxyethylene polyoxypropylene vegetable oils such as polyoxyethylene polyoxypropylene castor oils, polyoxyethylene fatty acid esters, polyoxyethylene alkyl ethers, polyoxyethylene tristyrylphenylphosphate diesters, polyoxyethylene polyoxypropylene tristyrylphenylphosphate diesters, fatty acid alcohol polyglycol ethers, and glycerin fatty acid esters. Preferred are polyoxyethylene polyoxypropylene block polymers, fatty acid esters of polyoxyethylene polyoxypropylene block polymers, polyoxyethylene vegetable oils, polyoxyethylene hardened vegetable oils, polyoxyethylene alkyl aryl ethers, polyoxyethylene tristyrylphenylphosphate diesters, and polyoxyethylene polyoxypropylene tristyrylphenylphosphate diesters. Particularly preferred are polyoxyethylene polyoxypropylene block polymers, and fatty acid esters of polyoxyethylene polyoxypropylene block polymers.

As the polyoxyethylene polyoxypropylene block polymer, a commercially available surfactant such as Teric PE 64 (manufactured by Huntsman) can be used. As the polyoxyethylene polyoxypropylene alkyl ether, a commercially available surfactant such as Antarox BO/327 or Antarox BO/340 (all manufactured by Rodia Nicca) can be used. As the polyoxyethylene alkyl aryl ether, a commercially available surfactant such as Sorpol T26 (manufactured by Toho Chemical Industry Co., Ltd.) can be used. As the polyoxyethylene castor oil, a commercially available surfactant such as Alkamuls OR40 or Alkamuls BR (all manufactured by Rhodia Nicca) can be used. As the polyoxyethylene hardened castor oil, a commercially available such as HCO-20 (manufactured by Nikko Chemicals Co., Ltd.) can be used. As the polyoxyethylene polyoxypropylene castor oil, a commercially available such as a CR series including Antarox CR/255 and CR/405 (all manufactured by Rhodia Nicca) can be used. As the polyoxyethylene fatty acid ester, a commercially available such as Newcol 150 (manufactured by Nippon Nyukazai Co., Ltd.) can be used. As the polyoxyethylene alkyl ether, a commercially available such as Newcol 1100 or Newcol 1105 (all manufactured by Nippon Nyukazai Co., Ltd.) can be used. As the glycerin fatty acid ester, a commercially available such as a Pionin D-900 series (manufactured by Takemoto Oil & Fat Co., Ltd.) can be used.

The total amount of the surfactant(s) contained in the present emulsion composition is in a range of 5 to 15% by weight and, in a more preferable aspect, the amount of the anionic surfactant(s) is 2 to 12% by weight and the amount of the nonionic surfactant(s) is 2 to 12% by weight.

Examples of the aromatic hydrocarbon solvent used in the present invention include alkylbenzene such as toluene, ethylbenzene, xylene and tetramethylbenzene, alkylnaphthalene such as methylnaphthalene, diphenylethane, dixylylethane, phenylxylylethane, and their mixtures.

The aromatic hydrocarbon solvent may be a commercially available solvent, and examples thereof include Hisol SAS-296 (trade name, manufactured by Nippon Oil Corporation; a mixture of 1-phenyl-1-xylylethane and 1-phenyl-1-ethylphenylethane), CACTUS SOLVENT HP-MN (trade name, manufactured by Japan Energy Corporation; methylnaphthalene 80%), CACTUS SOLVENT HP-DMN (trade name, manufactured by Japan Energy Corporation; dimethylnaphthalene 80%), CACTUS SOLVENT P-100 (trade name, manufactured by Japan Energy Corporation; alkylbenzene having 9 to 10 carbon atoms), CACTUS SOLVENT P-150 (trade name, manufactured by Japan Energy Corporation; alkylbenzene), CACTUS SOLVENT P-180 (trade name, manufactured by Japan Energy Corporation; a mixture of methylnaphthalene and dimethylnaphthalene), CACTUS SOLVENT P-200 (trade name, manufactured by Japan Energy Corporation; a mixture of methylnaphthalene and dimethylnaphthalene,), CACTUS SOLVENT P-220 (trade name, manufactured by Japan Energy Corporation; a mixture of methylnaphthalene and dimethylnaphthalene), CACTUS SOLVENT PAD-1 (trade name, manufactured by Japan Energy Corporation; dimethylmonoisopropylnaphthalene), Solvesso 100 (trade name, manufactured by Exxon Mobil Ltd.; an aromatic hydrocarbon solvent mainly comprising C₉₋₁₀ dialkylbenzene and C₉₋₁₀ trialkylbenzene), Solvesso 150 (trade name, manufactured by Exxon Mobil Ltd.; aromatic hydrocarbon comprising mainly C₁₀₋₁₁ alkylbenzene), Solvesso 150 ND (trade name, manufactured by Exxon Mobil Chemical Company; an aromatic hydrocarbon solvent mainly comprising C₁₀₋₁₁ alkylbenzene), Solvesso 200 (trade name, manufactured by Exxon Mobil Ltd.; an aromatic hydrocarbon solvent mainly comprising C₁₀₋₁₄ alkylnaphthalene), Solvesso 200 ND (trade name, manufactured by Exxon Mobil Chemical Company; an aromatic hydrocarbon solvent mainly comprising C₁₀₋₁₄ alkylnaphthalene), ULTRA LOW NAPHTHALENE AROMATIC 150 (trade name, manufactured by Exxon Mobil Chemical Company; an aromatic hydrocarbon solvent mainly comprising C₁₀₋₁₁ alkylbenzene), ULTRA LOW NAPHTHALENE AROMATIC 200 (trade name, manufactured by Exxon Mobil Chemical Company; an aromatic hydrocarbon solvent mainly comprising C₁₀₋₁₄ alkylnaphthalene), Swasol 100 (trade name, manufactured by Maruzen Petrochemical Co., Ltd.; toluene), Swasol 200 (trade name, manufactured by Maruzen Petrochemical Co., Ltd.; xylene) and the like.

The total amount of the aromatic hydrocarbon solvent(s) contained in the present emulsion composition is 2 to 60% by weight, preferably 3 to 50% by weight.

In the present invention, propylene glycol diacetate and 1,3-dimethyl-2-imidazolidinone may be each a commercially available product.

The amount of propylene glycol diacetate contained in the present emulsion composition is 2 to 60% by weight, preferably 3 to 50% by weight. The amount of 1,3-dimethyl-2-imidazolidinone contained in the present emulsion composition is 12 to 90% by weight, preferably 20 to 80% by weight.

The weight ratio of 1,3-dimethyl-2-imidazolodinone and the aromatic hydrocarbon solvent(s) contained in the present emulsion composition is 1 : 0.03 to 1 : 2.0, preferably 1 : 0.05 to 1 : 1.5. The weight ratio of 1,3-dimethyl-2-imidazolidinone and propylene glycol diacetate contained in the present emulsion composition is 1 : 0.03 to 1 : 2.0, preferably 1 : 0.05 to 1 : 1.5.

A mixed solvent consisting of the aromatic hydrocarbon solvent(s), propylene glycol diacetate and 1,3-dimethyl-2-imidazolidinone in the above-described ratio is useful as an organic solvent for an agrochemical preparation, in particular, an emulsion composition.

Embodiments of the present emulsion composition include:
an emulsion composition essentially consisting of 0.5 to 15% by weight of one or a plurality of hydrophobic active agrochemical compounds,
   5 to 15% by weight of one or a plurality of surfactants,
   2 to 60% by weight of one or a plurality of aromatic hydrocarbon solvents,
   2 to 60% by weight of propylene glycol diacetate,
   12 to 90% by weight of 1,3-dimethyl-2-imidazolidinone, and 0 to 5% by weight of one or a plurality of formulation auxiliaries,
      wherein a weight ratio of 1,3-dimethyl-2-imidazolidinone and the aromatic hydrocarbon solvent(s) is 1 : 0.03 to 1 :
   2.0, and
      a weight ratio of 1,3-dimethyl-2-imidazolidinone and propylene glycol diacetate is 1 : 0.03 to 1 : 2.0;
an emulsion composition essentially consisting of 0.5 to 25% by weight of one or a plurality of hydrophobic active agrochemical compounds,
   5 to 15% by weight of one or a plurality of surfactants,
   2 to 60% by weight of one or a plurality of aromatic hydrocarbon solvents,
   2 to 60% by weight of propylene glycol diacetate,
   12 to 90% by weight of 1,3-dimethyl-2-imidazolidinone, and 0 to 5% by weight of one or a plurality of formulation auxiliaries,
      wherein a weight ratio of 1,3-dimethyl-2-imidazolidinone and the aromatic hydrocarbon solvent(s) is 1 : 0.05 to 1 :
   1.5, and
      a weight ratio of 1,3-dimethyl-2-imidazolidinone and propylene glycol diacetate is 1 : 0.05 to 1 : 1.5;
an emulsion composition essentially consisting of 0.5 to 25% by weight of one or a plurality of hydrophobic active agrochemical compounds,
   5 to 15% by weight of a combination of one or a plurality of anionic surfactants and one or a plurality of nonionic surfactants,
   2 to 60% by weight of one or a plurality of aromatic hydrocarbon solvents,
   2 to 60% by weight of propylene glycol diacetate,
   12 to 90% by weight of 1,3-dimethyl-2-imidazolidinone, and 0 to 5% by weight of one or a plurality of formulation auxiliaries,
wherein a weight ratio of 1,3-dimethyl-2-imidazolidinone and the aromatic hydrocarbon solvent(s) is 1 : 0.03 to 1 : 2.0, and
a weight ratio of 1,3-dimethyl-2-imidazolidinone and propylene glycol diacetate is 1 : 0.03 to 1 : 2.0;
an emulsion composition essentially consisting of 0.5 to 25% by weight of one or a plurality of hydrophobic active agrochemical compounds,
   5 to 15% by weight of a combination of one or a plurality of anionic surfactants and one or a plurality of nonionic surfactants,
   2 to 60% by weight of one or a plurality of aromatic hydrocarbon solvents,
   2 to 60% by weight of propylene glycol diacetate,
   12 to 90% by weight of 1,3-dimethyl-2-imidazolidinone, and 0 to 5% by weight of one or a plurality of formulation auxiliaries,
      wherein a weight ratio of 1,3-dimethyl-2-imidazolidinone and the aromatic hydrocarbon solvent(s) is 1 : 0.05 to 1 :
   1.5, and
      a weight ratio of 1,3-dimethyl-2-imidazolidinone and propylene glycol diacetate is 1 : 0.05 to 1 : 1.5;
      an emulsion composition essentially consisting of 0.5 to 15% by weight of one or a plurality of hydrophobic active agrochemical compounds,
   5 to 15% by weight of one or a plurality of surfactants,
   2 to 60% by weight of one or a plurality of aromatic hydrocarbon solvents,
   2 to 60% by weight of propylene glycol diacetate,
   12 to 90% by weight of 1,3-dimethyl-2-imidazolidinone, and 0 to 5% by weight of one or a plurality of formulation auxiliaries,
      wherein a weight ratio of 1,3-dimethyl-2-imidazolidinone and the aromatic hydrocarbon solvent(s) is 1 : 0.05 to 1 :
   1.5, and
      a weight ratio of 1,3-dimethyl-2-imidazolidinone and propylene glycol diacetate is 1 : 0.05 to 1 : 1.5;
      an emulsion composition essentially consisting of 0.5 to 15% by weight of one or a plurality of hydrophobic active agrochemical compounds,
   5 to 15% by weight of a combination of one or a plurality of anionic surfactants and one or a plurality of nonionic surfactants,
   2 to 60% by weight of one or a plurality of aromatic hydrocarbon solvents,
   2 to 60% by weight of propylene glycol diacetate,
   12 to 90% by weight of 1,3-dimethyl-2-imidazolidinone, and 0 to 5% by weight of one or a plurality of formulation auxiliaries,
wherein a weight ratio of 1,3-dimethyl-2-imidazolidinone and the aromatic hydrocarbon solvent(s) is 1 : 0.03 to 1 : 2.0, and
a weight ratio of 1,3-dimethyl-2-imidazolidinone and propylene glycol diacetate is 1 : 0.03 to 1 : 2.0;
an emulsion composition essentially consisting of 0.5 to 15% by weight of one or a plurality of hydrophobic active agrochemical compounds,
   5 to 15% by weight of a combination of one or a plurality of anionic surfactants and one or a plurality of nonionic surfactants,
   2 to 60% by weight of one or a plurality of aromatic hydrocarbon solvents,
   2 to 60% by weight of propylene glycol diacetate,
   12 to 90% by weight of 1,3-dimethyl-2-imidazolidinone, and 0 to 5% by weight of one or a plurality of formulation auxiliaries,
      wherein a weight ratio of 1,3-dimethyl-2-imidazolidinone and the aromatic hydrocarbon solvent(s) is 1 : 0.05 to 1 :
   1.5, and
      a weight ratio of 1,3-dimethyl-2-imidazolidinone and propylene glycol diacetate is 1 : 0.05 to 1 : 1.5;
      an emulsion composition essentially consisting of 0.5 to 15% by weight of one or a plurality of hydrophobic active agrochemical compounds,
   5 to 15% by weight of a combination of an alkylarylsulfonate and a polyoxyethylene polyoxypropylene block polymer,
   2 to 60% by weight of one or a plurality of aromatic hydrocarbon solvents,
   2 to 60% by weight of propylene glycol diacetate,
   12 to 90% by weight of 1,3-dimethyl-2-imidazolidinone, and 0 to 5% by weight of one or a plurality of formulation auxiliaries,
      wherein a weight ratio of 1,3-dimethyl-2-imidazolidinone and the aromatic hydrocarbon solvent(s) is 1 : 0.03 to 1 :
   2.0, and
      a weight ratio of 1,3-dimethyl-2-imidazolidinone and propylene glycol diacetate is 1 : 0.03 to 1 : 2.0;
      an emulsion composition essentially consisting of 0.5 to 15% by weight of one or a plurality of hydrophobic active agrochemical compounds,
   5 to 15% by weight of a combination of an alkylarylsulfonate and a polyoxyethylene polyoxypropylene block polymer,
   2 to 60% by weight of one or a plurality of aromatic hydrocarbon solvents,
   2 to 60% by weight of propylene glycol diacetate,
   12 to 90% by weight of 1,3-dimethyl-2-imidazolidinone, and 0 to 5% by weight of one or a plurality of formulation auxiliaries,
wherein a weight ratio of 1,3-dimethyl-2-imidazolidinone and the aromatic hydrocarbon solvent(s) is 1 : 0.05 to 1 : 1.5, and
a weight ratio of 1,3-dimethyl-2-imidazolidinone and propylene glycol diacetate is 1 : 0.05 to 1 : 1.5;
an emulsion composition essentially consisting of 0.5 to 25% by weight of one or a plurality of hydrophobic active agrochemical compounds,
   5 to 15% by weight of one or a plurality of surfactants,
   3 to 50% by weight of one or a plurality of aromatic hydrocarbon solvents,
   3 to 50% by weight of propylene glycol diacetate,
   20 to 80% by weight of 1,3-dimethyl-2-imidazolidinone, and 0 to 5% by weight of one or a plurality of formulation auxiliaries,
      wherein a weight ratio of 1,3-dimethyl-2-imidazolidinone and the aromatic hydrocarbon solvent(s) is 1 : 0.03 to 1 :
   2.0, and
      a weight ratio of 1,3-dimethyl-2-imidazolidinone and propylene glycol diacetate is 1 : 0.03 to 1 : 2.0;
      an emulsion composition essentially consisting of 0.5 to 25% by weight of one or a plurality of hydrophobic active agrochemical compounds,
   5 to 15% by weight of one or a plurality of surfactants,
   3 to 50% by weight of one or a plurality of aromatic hydrocarbon solvents,
   3 to 50% by weight of propylene glycol diacetate,
   20 to 80% by weight of 1,3-dimethyl-2-imidazolidinone, and 0 to 5% by weight of one or a plurality of formulation auxiliaries,
      wherein a weight ratio of 1,3-dimethyl-2-imidazolidinone and the aromatic hydrocarbon solvent(s) is 1 : 0.05 to 1 : 1.5, and
      a weight ratio of 1,3-dimethyl-2-imidazolidinone and propylene glycol diacetate is 1 : 0.05 to 1 : 1.5;
      an emulsion composition essentially consisting of 0.5 to 25% by weight of one or a plurality of hydrophobic active agrochemical compounds,
   5 to 15% by weight of a combination of one or a plurality of anionic surfactants and one or a plurality of nonionic surfactants,
   3 to 50% by weight of one or a plurality of aromatic hydrocarbon solvents,
   3 to 50% by weight of propylene glycol diacetate,
   20 to 80% by weight of 1,3-dimethyl-2-imidazolidinone, and 0 to 5% by weight of one or a plurality of formulation auxiliaries,
wherein a weight ratio of 1,3-dimethyl-2-imidazolidinone and the aromatic hydrocarbon solvent(s) is 1 : 0.03 to 1 : 2.0, and
a weight ratio of 1,3-dimethyl-2-imidazolidinone and propylene glycol diacetate is 1 : 0.03 to 1 : 2.0;
an emulsion composition essentially consisting of 0.5 to 25% by weight of one or a plurality of hydrophobic active agrochemical compounds,
   5 to 15% by weight of a combination of one or a plurality of anionic surfactants and one or a plurality of nonionic surfactants,
   3 to 50% by weight of one or a plurality of aromatic hydrocarbon solvents,
   3 to 50% by weight of propylene glycol diacetate,
   20 to 80% by weight of 1,3-dimethyl-2-imidazolidinone, and 0 to 5% by weight of one or a plurality of formulation auxiliaries,
      wherein a weight ratio of 1,3-dimethyl-2-imidazolidinone and the aromatic hydrocarbon solvent(s) is 1 : 0.05 to 1 :
   1.5, and
      a weight ratio of 1,3-dimethyl-2-imidazolidinone and propylene glycol diacetate is 1 : 0.05 to 1 : 1.5;
      an emulsion composition essentially consisting of 0.5 to 15% by weight of one or a plurality of hydrophobic active agrochemical compounds,
   5 to 15% by weight of a combination of an alkylarylsulfonate and a polyoxyethylene polyoxypropylene block polymer,
   3 to 50% by weight of one or a plurality of aromatic hydrocarbon solvents,
   3 to 50% by weight of propylene glycol diacetate,
   20 to 80% by weight of 1,3-dimethyl-2-imidazolidinone, and 0 to 5% by weight of one or a plurality of formulation auxiliaries,
      wherein a weight ratio of 1,3-dimethyl-2-imidazolidinone and the aromatic hydrocarbon solvent(s) is 1 : 0.03 to 1 :
   2.0, and
      a weight ratio of 1,3-dimethyl-2-imidazolidinone and propylene glycol diacetate is 1 : 0.03 to 1 : 2.0;
      an emulsion composition essentially consisting of 0.5 to 15% by weight of one or a plurality of hydrophobic active agrochemical compounds,
   5 to 15% by weight of a combination of an alkylarylsulfonate and a polyoxyethylene polyoxypropylene block polymer,
   3 to 50% by weight of one or a plurality of aromatic hydrocarbon solvents,
   3 to 50% by weight of propylene glycol diacetate,
   20 to 80% by weight of 1,3-dimethyl-2-imidazolidinone, and 0 to 5% by weight of one or a plurality of formulation auxiliaries,
      wherein a weight ratio of 1,3-dimethyl-2-imidazolidinone and the aromatic hydrocarbon solvent(s) is 1 : 0.05 to 1 :
   1.5, and
      a weight ratio of 1,3-dimethyl-2-imidazolidinone and propylene glycol diacetate is 1 : 0.05 to 1 : 1.5;
      an emulsion composition essentially consisting of 0.5 to 25% by weight of the herbicidal compound 1,
   5 to 15% by weight of one or a plurality of surfactants,
   2 to 60% by weight of one or a plurality of aromatic hydrocarbon solvents,
   2 to 60% by weight of propylene glycol diacetate,
   12 to 90% by weight of 1,3-dimethyl-2-imidazolidinone, and 0 to 5% by weight of one or a plurality of formulation auxiliaries,
      wherein a weight ratio of 1,3-dimethyl-2-imidazolidinone and the aromatic hydrocarbon solvent(s) is 1 : 0.03 to 1 :
   2.0, and
      a weight ratio of 1,3-dimethyl-2-imidazolidinone and propylene glycol diacetate is 1 : 0.03 to 1 : 2.0;
      an emulsion composition essentially consisting of 0.5 to 25% by weight of the herbicidal compound 2,
   5 to 15% by weight of one or a plurality of surfactants,
   2 to 60% by weight of one or a plurality of aromatic hydrocarbon solvents,
   2 to 60% by weight of propylene glycol diacetate,
   12 to 90% by weight of 1,3-dimethyl-2-imidazolidinone, and 0 to 5% by weight of one or a plurality of formulation auxiliaries,
      wherein a weight ratio of 1,3-dimethyl-2-imidazolidinone and the aromatic hydrocarbon solvent(s) is 1 : 0.03 to 1 :
   2.0, and
      a weight ratio of 1,3-dimethyl-2-imidazolidinone and propylene glycol diacetate is 1 : 0.03 to 1 : 2.0;
      an emulsion composition essentially consisting of 0.5 to 25% by weight of the herbicidal compound 17,
   5 to 15% by weight of one or a plurality of surfactants,
   2 to 60% by weight of one or a plurality of aromatic hydrocarbon solvents,
   2 to 60% by weight of propylene glycol diacetate,
   12 to 90% by weight of 1,3-dimethyl-2-imidazolidinone, and 0 to 5% by weight of one or a plurality of formulation auxiliaries,
      wherein a weight ratio of 1,3-dimethyl-2-imidazolidinone and the aromatic hydrocarbon solvent(s) is 1 : 0.03 to 1 :
   2.0, and
      a weight ratio of 1.3-dimethyl-2-imidazolidinone and propylene glycol diacetate is 1 : 0.03 to 1 : 2.0;
      an emulsion composition essentially consisting of 0.5 to 25% by weight of the herbicidal compound 27,
   5 to 15% by weight of one or a plurality of surfactants,
   2 to 60% by weight of one or a plurality of aromatic hydrocarbon solvents,
   2 to 60% by weight of propylene glycol diacetate,
   12 to 90% by weight of 1,3-dimethyl-2-imidazolidinone, and 0 to 5% by weight of one or a plurality of formulation auxiliaries,
      wherein a weight ratio of 1,3-dimethyl-2-imidazolidinone and the aromatic hydrocarbon solvent(s) is 1 : 0.03 to 1 : 2.0, and
   a weight ratio of 1,3-dimethyl-2-imidazolidinone and propylene glycol diacetate is 1 : 0.03 to 1 : 2.0;
      an emulsion composition essentially consisting of 0.5 to 25% by weight of the herbicidal compound 33,
   5 to 15% by weight of one or a plurality of surfactants,
   2 to 60% by weight of one or a plurality of aromatic hydrocarbon solvents,
   2 to 60% by weight of propylene glycol diacetate,
   12 to 90% by weight of 1,3-dimethyl-2-imidazolidinone, and 0 to 5% by weight of one or a plurality of formulation auxiliaries,
      wherein a weight ratio of 1,3-dimethyl-2-imidazolidinone and the aromatic hydrocarbon solvent(s) is 1 : 0.03 to 1 :
   2.0, and
      a weight ratio of 1,3-dimethyl-2-imidazolidinone and propylene glycol diacetate is 1 : 0.03 to 1 : 2.0;
      an emulsion composition essentially consisting of 0.5 to 25% by weight of the herbicidal compound 49,
   5 to 15% by weight of one or a plurality of surfactants,
   2 to 60% by weight of one or a plurality of aromatic hydrocarbon solvents,
   2 to 60% by weight of propylene glycol diacetate,
   12 to 90% by weight of 1,3-dimethyl-2-imidazolidinone, and 0 to 5% by weight of one or a plurality of formulation auxiliaries,
      wherein a weight ratio of 1,3-dimethyl-2-imidazolidinone and the aromatic hydrocarbon solvent(s) is 1 : 0.03 to 1 :
   2.0, and
      a weight ratio of 1,3-dimethyl-2-imidazolidinone and propylene glycol diacetate is 1 : 0.03 to 1 : 2.0;
      an emulsion composition essentially consisting of 0.5 to 25% by weight of the herbicidal compound 55,
   5 to 15% by weight of one or a plurality of surfactants,
   2 to 60% by weight of one or a plurality of aromatic hydrocarbon solvents,
   2 to 60% by weight of propylene glycol diacetate,
   12 to 90% by weight of 1,3-dimethyl-2-imidazolidinone, and 0 to 5% by weight of one or a plurality of formulation auxiliaries,
      wherein a weight ratio of 1,3-dimethyl-2-imidazolidinone and the aromatic hydrocarbon solvent(s) is 1 : 0.03 to 1 :
   2.0, and
      a weight ratio of 1,3-dimethyl-2-imidazolidinone and propylene glycol diacetate is 1 : 0.03 to 1 : 2.0;
      an emulsion composition essentially consisting of 0.5 to 25% by weight of the bactericidal compound 22,
   5 to 15% by weight of one or a plurality of surfactants,
   2 to 60% by weight of one or a plurality of aromatic hydrocarbon solvents,
   2 to 60% by weight of propylene glycol diacetate,
   12 to 90% by weight of 1,3-dimethyl-2-imidazolidinone, and 0 to 5% by weight of one or a plurality of formulation auxiliaries,
      wherein a weight ratio of 1,3-dimethyl-2-imidazolidinone and the aromatic hydrocarbon solvent(s) is 1 : 0.03 to 1 :
   2.0, and
      a weight ratio of 1,3-dimethyl-2-imidazolidinone and propylene glycol diacetate is 1 : 0.03 to 1 : 2.0;
      an emulsion composition essentially consisting of 0.5 to 25% by weight of the bactericidal compound 26,
   5 to 15% by weight of one or a plurality of surfactants,
   2 to 60% by weight of one or a plurality of aromatic hydrocarbon solvents,
   2 to 60% by weight of propylene glycol diacetate,
   12 to 90% by weight of 1,3-dimethyl-2-imidazolidinone, and 0 to 5% by weight of one or a plurality of formulation auxiliaries,
wherein a weight ratio of 1,3-dimethyl-2-imidazolidinone and the aromatic hydrocarbon solvent(s) is 1 : 0.03 to 1 : 2.0, and
a weight ratio of 1,3-dimethyl-2-imidazolidinone and propylene glycol diacetate is 1 : 0.03 to 1 : 2.0;
an emulsion composition essentially consisting of 0.5 to 25% by weight of the bactericidal compound 39, 5 to 15% by weight of one or a plurality of surfactants, 2 to 60% by weight of one or a plurality of aromatic hydrocarbon solvents,
2 to 60% by weight of propylene glycol diacetate,
12 to 90% by weight of 1,3-dimethyl-2-imidazolidinone, and 0 to 5% by weight of one or a plurality of formulation auxiliaries,
   wherein a weight ratio of 1,3-dimethyl-2-imidazolidinone and the aromatic hydrocarbon solvent(s) is 1 : 0.03 to 1 :
2.0, and
   a weight ratio of 1,3-dimethyl-2-imidazolidinone and propylene glycol diacetate is 1 : 0.03 to 1 : 2.0;
   an emulsion composition essentially consisting of 0.5 to 25% by weight of the bactericidal compound 56,
5 to 15% by weight of one or a plurality of surfactants,
2 to 60% by weight of one or a plurality of aromatic hydrocarbon solvents,
2 to 60% by weight of propylene glycol diacetate,
12 to 90% by weight of 1,3-dimethyl-2-imidazolidinone, and 0 to 5% by weight of one or a plurality of formulation auxiliaries,
wherein a weight ratio of 1,3-dimethyl-2-imidazolidinone and the aromatic hydrocarbon solvent(s) is 1 : 0.03 to 1 : 2.0, and
a weight ratio of 1,3-dimethyl-2-imidazolidinone and propylene glycol diacetate is 1 : 0.03 to 1 : 2.0;
an emulsion composition essentially consisting of 0.5 to 25% by weight of the bactericidal compound 58, 5 to 15% by weight of one or a plurality of surfactants, 2 to 60% by weight of one or a plurality of aromatic hydrocarbon solvents,
2 to 60% by weight of propylene glycol diacetate,
12 to 90% by weight of 1,3-dimethyl-2-imidazolidinone, and 0 to 5% by weight of one or a plurality of formulation auxiliaries,
   wherein a weight ratio of 1,3-dimethyl-2-imidazolidinone and the aromatic hydrocarbon solvent(s) is 1 : 0.03 to 1 :
2.0, and
   a weight ratio of 1,3-dimethyl-2-imidazolidinone and propylene glycol diacetate is 1 : 0.03 to 1 : 2.0;
   an emulsion composition essentially consisting of 0.5 to 25% by weight of the insecticidal compound 37,
5 to 15% by weight of one or a plurality of surfactants,
2 to 60% by weight of one or a plurality of aromatic hydrocarbon solvents,
2 to 60% by weight of propylene glycol diacetate,
12 to 90% by weight of 1,3-dimethyl-2-imidazolidinone, and 0 to 5% by weight of one or a plurality of formulation auxiliaries,
   wherein a weight ratio of 1,3-dimethyl-2-imidazolidinone and the aromatic hydrocarbon solvent(s) is 1 : 0.03 to 1 :
2.0, and
   a weight ratio of 1,3-dimethyl-2-imidazolidinone and propylene glycol diacetate is 1 : 0.03 to 1 : 2.0;
   an emulsion composition essentially consisting of 0.5 to 25% by weight of the insecticidal compound 51,
5 to 15% by weight of one or a plurality of surfactants,
2 to 60% by weight of one or a plurality of aromatic hydrocarbon solvents,
2 to 60% by weight of propylene glycol diacetate,
12 to 90% by weight of 1,3-dimethyl-2-imidazolidinone, and 0 to 5% by weight of one or a plurality of formulation auxiliaries,
   wherein a weight ratio of 1,3-dimethyl-2-imidazolidinone and the aromatic hydrocarbon solvent(s) is 1 : 0.03 to 1 :
2.0, and
   a weight ratio of 1,3-dimethyl-2-imidazolidinone and propylene glycol diacetate is 1 : 0.03 to 1 : 2.0;
   an emulsion composition essentially consisting of 0.5 to 25% by weight of the insecticidal compound 53,
5 to 15% by weight of one or a plurality of surfactants,
2 to 60% by weight of one or a plurality of aromatic hydrocarbon solvents,
2 to 60% by weight of propylene glycol diacetate,
12 to 90% by weight of 1,3-dimethyl-2-imidazolidinone, and 0 to 5% by weight of one or a plurality of formulation auxiliaries,
   wherein a weight ratio of 1,3-dimethyl-2-imidazolidinone and the aromatic hydrocarbon solvent(s) is 1 : 0.03 to 1 :
2.0, and
   a weight ratio of 1,3-dimethyl-2-imidazolidinone and propylene glycol diacetate is 1 : 0.03 to 1 : 2.0;
   an emulsion composition essentially consisting of 0.5 to 25% by weight of the insecticidal compound 54,
5 to 15% by weight of one or a plurality of surfactants,
2 to 60% by weight of one or a plurality of aromatic hydrocarbon solvents,
2 to 60% by weight of propylene glycol diacetate,
12 to 90% by weight of 1,3-dimethyl-2-imidazolidinone, and 0 to 5% by weight of one or a plurality of formulation auxiliaries,
wherein a weight ratio of 1,3-dimethyl-2-imidazolidinone and the aromatic hydrocarbon solvent(s) is 1 : 0.03 to 1 : 2.0, and
a weight ratio of 1,3-dimethyl-2-imidazolidinone and propylene glycol diacetate is 1 : 0.03 to 1 : 2.0.

The present emulsion composition may contain a formulation auxiliary such as an antioxidant, a colorant, a flavor, an efficacy enhancer, a harmful effect-decreasing agent or the like, if necessary.

Examples of the antioxidant include 3-/2-t-butyl-4-hydroxyanisole, butylated hydroxytoluene and the like. Examples of the colorant include rhodamine B, Yellow No. 4, Blue No. 1, Red No. 2 and the like.

The total amount of the formulation auxiliary(ies) contained in the present emulsion composition is in a range of 0 to 5% by weight.

The present emulsion composition can be produced, for example, by adding the hydrophobic active agrochemical compound(s), the surfactant(s) and optionally the formulation auxiliary(ies) to a mixture of the aromatic hydrocarbon solvent(s), propylene glycol diacetate and 1,2-dimethyl-2-imidazolidinone, if necessary, under heating (80°C or less), and then stirring the mixture until a homogeneous mixture is obtained, and further if necessary, filtering the mixture.

The present emulsion composition is a homogeneous liquid which substantially consists of one continuous phase.

The present emulsion composition is applied in the form of an aqueous dilution. The present emulsion composition is diluted with usually a 10 to 5000-fold amount of water, preferably a 20 to 2500-fold amount of water. Water used for dilution may be hard water or soft water, or may be water containing an auxiliary such as a spreading agent if necessary.

### Examples

Hereinafter, the present invention will be explained in more detail by reference to Production Examples, Test Examples and the like which the present invention is not limited to. Reagents used in Examples are as follows.

Anionic surfactant A: calcium dodecylbenzenesulfonate (Nansa EVM 62/H, manufactured by Huntsman);
Nonionic surfactant B: polyoxyethylene polyoxypropylene block polymer (Toximul 8320, manufactured by Stepan);
Aromatic hydrocarbon solvent A: Solvesso 200 ND (mainly C₁₁₋₁₄alkylnaphthalene, manufactured by Exxon Mobil Chemical);
PGDA: propylene glycol diacetate (manufactured by Wako Pure Chemical Industries, Ltd.);
DMI: 1,3-dimethyl-2-imidazolidinone (manufactured by China CSIMC Pharmchem Factory).

### Production Example 1

In a 100 ml volumetric flask, 2.5 g of the herbicidal compound 2, 3.0 g of the anionic surfactant A, 3.0 g of the nonionic surfactant B, 35.0 g of DMI and 20.0 g of the aromatic hydrocarbon solvent A were put at room temperature. Then, PGDA (about 34 g) was added to the mixture up to a total volume of 100 ml. The mixture was stirred under warming until a homogeneous mixture was obtained to prepare a present emulsion composition 1.

### Production Examples 2 to 8

Present emulsion compositions 2 to 4 were prepared using reagents and their ratios shown in Table 1 and Table 2 according to the procedure of Production Example 1.

**[Table 1]**

| | Example 1 | Example 2 | Example 3 | Example 4 |
|---|---|---|---|---|
| Herbicidal compound 2 | 5.0 | 5.0 | | |
| Bactericidal compound 58 | | | 5.0 | 5.0 |
| Anionic surfactant A | 3.0 | 3.0 | 3.0 | 3.0 |
| Nonionic surfactant B | 3.0 | 3.0 | 3.0 | 3.0 |
| PGDA | ≅34 (*) | ≅19 (*) | ≅34 (*) | ≅19 (*) |
| DMI | 35.0 | 50.0 | 35.0 | 50.0 |
| Aromatic hydrocarbon solvent A | 20.0 | 20.0 | 20.0 | 20.0 |

| | | | | |
|---|---|---|---|---|
| *: The said ingredient was added up to a total volume of 100 ml. | | | | |

**[Table 2]**

| | Example 5 | Example 6 | Example 7 | Example 8 |
|---|---|---|---|---|
| Insecticidal compound 37 | 5.0 | 5.0 | | |
| Herbicidal compound 17 | | | 5.0 | 5.0 |
| Anionic surfactant A | 3.0 | 3.0 | 3.0 | 3.0 |
| Nonionic surfactant B | 3.0 | 3.0 | 3.0 | 3.0 |
| PGDA | ≅34 (*) | ≅19 (*) | ≅34 (*) | ≅19 (*) |
| DMI | 35.0 | 50.0 | 35.0 | 50.0 |
| Aromatic hydrocarbon solvent A | 20.0 | 20.0 | 20.0 | 20.0 |

| | | | | |
|---|---|---|---|---|
| *: The said ingredient was added up to a total volume of 100 ml. | | | | |

### Test Example 1 (low temperature storage)

The present emulsion compositions 1 to 6 were stored at 0°C for 1 week, and changes in their appearances were observed. After the storage, the present emulsion compositions were transparent and clear in liquid form, and a precipitate was not observed.

### Test Example 2 (emulsion stability)

The present emulsion compositions 1 to 8 were diluted 100-fold with CIPAC (Collaborative International Pesticides Analytical Council) standard water A (hardness: 20 ppm) in a 100 ml graduated cylinder with a plug, and then allowed to stand at 30°C for 0.5 hours. The conditions of the aqueous dilutions were observed. The aqueous dilutions each maintained a stable emulsified state.

### Test Example 3 (emulsion stability)

The present emulsion compositions 1 to 6 were diluted 100-fold with CIPAC standard water D (hardness: 342 ppm) in a 100 ml graduated cylinder with a plug, and then allowed to stand at 30°C for 0.5 hours. The conditions of the aqueous dilutions were observed. The aqueous dilutions each maintained a stable emulsified state.

### Production Examples 9 to 20

Present emulsion compositions 9 to 20 were prepared using reagents and their ratios shown in Table 3 to Table 5 according to the procedure of Production Example 1.

**[Table 3]**

| | Example 9 | Example 10 | Example 11 | Example 12 |
|---|---|---|---|---|
| Herbicidal compound 2 | 5.0 | 5.0 | 5.0 | 5.0 |
| Anionic surfactant A | 3.0 | 3.0 | 3.0 | 3.0 |
| Nonionic surfactant B | 3.0 | 3.0 | 3.0 | 3.0 |
| PGDA | ≅9 (*) | ≅4 (*) | ≅9 (*) | ≅4 (*) |
| DMI | 35.0 | 35.0 | 50.0 | 50.0 |
| Aromatic hydrocarbon solvent A | 45.0 | 50.0 | 30.0 | 35.0 |

| | | | | |
|---|---|---|---|---|
| *: The said ingredient was added up to a total volume of 100 ml. | | | | |

**[Table 4]**

| | Example 13 | Example 14 | Example 15 | Example 16 |
|---|---|---|---|---|
| Herbicidal compound 2 | 5.0 | 5.0 | 5.0 | 5.0 |
| Anionic surfactant A | 3.0 | 3.0 | 3.0 | 3.0 |
| Nonionic surfactant B | 3.0 | 3.0 | 3.0 | 3.0 |
| PGDA | ≅6 (*) | ≅4 (*) | ≅9 (*) | ≅36 (*) |
| DMI | 75.0 | 75.0 | 75.0 | 50.0 |
| Aromatic hydrocarbon solvent A | 8.0 | 10.0 | 5.0 | 3.0 |

| | | | | |
|---|---|---|---|---|
| *: The said ingredient was added up to a total volume of 100 ml. | | | | |

**[Table 5]**

| | Example 17 | Example 18 | Example 19 | Example 20 |
|---|---|---|---|---|
| Herbicidal compound 2 | 5.0 | 5.0 | 5.0 | 5.0 |
| Anionic surfactant A | 3.0 | 3.0 | 3.0 | 3.0 |
| Nonionic surfactant B | 3.0 | 3.0 | 3.0 | 3.0 |
| PGDA | ≅49 (*) | ≅44 (*) | ≅29 (*) | ≅24 (*) |
| DMI | 35.0 | 35.0 | 50.0 | 50.0 |
| Aromatic hydrocarbon solvent A | 5.0 | 10.0 | 10.0 | 15.0 |

| | | | | |
|---|---|---|---|---|
| *: The said ingredient was added up to a total volume of 100 ml. | | | | |

The emulsion composition of the present invention is useful as a preparation containing an active agrochemical compound.

## Claims

1. An emulsion composition essentially consisting of:
0.5 to 25% by weight of one or a plurality of hydrophobic active agrochemical compounds having a solubility in waker at pH 7.0 and 25°C of lower than 1000 ppm ,
5 to 15% by weight of one or a plurality of surfactants,
2 to 60% by weight of one or a plurality of aromatic hydrocarbon solvents,
2 to 60% by weight of propylene glycol diacetate,
12 to 90% by weight of 1,3-dimethyl-2-imidazolidinone,
and
0 to 5% by weight of one or a plurality of formulation auxiliaries,
wherein a weight ratio of 1,3-dimethyl-2-imidazolidinone and the aromatic hydrocarbon solvent(s) is 1 : 0.03 to 1 : 2.0, and
a weight ratio of 1,3-dimethyl-2-imidazolidinone and
propylene glycol diacetate is 1 : 0.03 to 1 : 2.0.

2. The emulsion composition according to claim 1,
wherein the weight ratio of 1,3-dimethyl-2-imidazolidinone and the aromatic hydrocarbon solvent(s) is 1 : 0.05 to 1 : 1.5.

3. The emulsion composition according to claim 1,
wherein the weight ratio of 1,3-dimethyl-2-imidazolidinone and propylene glycol diacetate is 1 : 0.05 to 1 : 1.5.

4. The emulsion composition according to claim 1,
wherein the surfactant(s) are selected from the group consisting of anionic surfactants and nonionic surfactants.

5. The emulsion composition according to claim 4,
wherein the anionic surfactant is an alkylarylsulfonate.

6. The emulsion composition according to any one of claims 1 to 5, wherein the hydrophobic active agrochemical compound is a neonicotinoid insecticidal compound.

7. The emulsion composition according to claim 1,
wherein the hydrophobic active agrochemical compound is a sulfonylurea herbicidal compound or a dicarboxyimide herbicidal compound.

8. A solvent for agrochemical compounds consisting of one or a plurality of aromatic hydrocarbon solvents,
propylene glycol diacetate, and 1,3-dimethyl-2-imidazolidinone,
wherein a weight ratio of 1,3-dimethyl-2-imidazolidinone and the aromatic hydrocarbon solvent(s) is 1 : 0.03 to 1 : 2.0, and
a weight ratio of 1,3-dimethyl-2-imidazolidinone and
propylene glycol diacetate is 1 : 0.03 to 1 : 2.0.

9. A 10 to 5000-fold aqueous dilution of the
emulsion composition according to claim 1.

10. Use of a solvent consisting of one or a plurality of aromatic hydrocarbon solvents, propylene glycol diacetate and 1,3-dimethyl-2-imidazolidinone for dissolving active agrochemical compounds having a solubility in waker at pH 7.0 and 25°C of lower than 1000 ppm, wherein a weight ratio of 1,3-dimethyl-2-imidazolidinone and the aromatic hydrocarbon solvent(s) is 1 : 0.03 to 1 : 2.0, and a weight ratio of 1,3-dimethyl-2-imidazolidinone and propylene glycol diacetate is 1 : 0.03 to 1 : 2.0.

## Patentansprüche

1. Eine Emulsionszusammensetzung, im Wesentlichen bestehend aus:
0,5 bis 25 Gew.-% einer oder einer Mehrzahl von hydrophoben aktiven agrochemischen Verbindungen mit einer Löslichkeit in Wasser bei einem pH-Wert von 7,0 und bei 25 °C von weniger als 1000 ppm,
5 bis 15 Gew.-% eines oder einer Mehrzahl von oberflächenaktiven Mitteln,
2 bis 60 Gew.-% eines oder einer Mehrzahl von aromatischen Kohlenwasserstoff-Lösungsmitteln,
2 bis 60 Gew.-% Propylenglycoldiacetat,
12 bis 90 Gew.-% 1,3-Dimethyl-2-imidazolidinon,
und
0 bis 5 Gew.-% eines oder einer Mehrzahl von Formulierungshilfsmitteln,
wobei ein Gewichtsverhältnis von 1,3-Dimethyl-2-imidazolidinon und dem/-n aromatischen Kohlenwasserstoff-Lösungsmittel(n) 1 : 0,03 bis 1 : 2,0 beträgt und
ein Gewichtsverhältnis von 1,3-Dimethyl-2-imidazolidinon und Propylenglycoldiacetat 1 : 0,03 bis 1 : 2,0 beträgt.

2. Die Emulsionszusammensetzung gemäß Anspruch 1, wobei das Gewichtsverhältnis von 1,3-Dimethyl-2-imidazolidinon und dem/-n aromatischen KohlenwasserstoffLösungsmittel(n) 1 : 0,05 bis 1 : 1,5 beträgt.

3. Die Emulsionszusammensetzung gemäß Anspruch 1, wobei das Gewichtsverhältnis von 1,3-Dimethyl-2-imidazolidinon und Propylenglycoldiacetat 1 : 0,05 bis 1 : 1,5 beträgt.

4. Die Emulsionszusammensetzung gemäß Anspruch 1, wobei das/die oberflächenaktive(n) Mittel ausgewählt ist/sind aus der Gruppe bestehend aus anionischen oberflächenaktiven Mitteln und nichtionischen oberflächenaktiven Mitteln.

5. Die Emulsionszusammensetzung gemäß Anspruch 4, wobei das anionische oberflächenaktive Mittel ein Alkylarylsulfonat ist.

6. Die Emulsionszusammensetzung gemäß einem der Ansprüche 1 bis 5, wobei die hydrophobe aktive agrochemische Verbindung eine neonicotinoide insektizide Verbindung ist.

7. Die Emulsionszusammensetzung gemäß Anspruch 1, wobei die hydrophobe aktive agrochemische Verbindung eine Sulfonylharnstoff-herbizide Verbindung oder eine Dicarboxyimid-herbizide Verbindung ist.

8. Ein Lösungsmittel für agrochemische Verbindungen bestehend aus einem oder einer Mehrzahl von aromatischen Kohlenwasserstoff-Lösungsmitteln, Propylenglycoldiacetat und 1,3-Dimethyl-2-imidazolidinon,
wobei ein Gewichtsverhältnis von 1,3-Dimethyl-2-imidazolidinon und dem/-n aromatischen Kohlenwasserstoff-Lösungsmittel(n) 1 : 0,03 bis 1 : 2,0 beträgt und
ein Gewichtsverhältnis von 1,3-Dimethyl-2-imidazolidinon und Propylenglycoldiacetat 1 : 0,03 bis 1 : 2,0 beträgt.

9. Eine 10- bis 5000-fache wässrige Verdünnung der Emulsionszusammensetzung gemäß Anspruch 1.

10. Verwendung eines Lösungsmittels bestehend aus einem oder einer Mehrzahl von aromatischen Kohlenwasserstoff-Lösungsmitteln, Propylenglycoldiacetat und 1,3-Dimethyl-2-imidazolidinon zum Lösen von aktiven agrochemischen Verbindungen mit einer Löslichkeit in Wasser bei einem pH-Wert von 7,0 und bei 25 °C von weniger als 1000 ppm, wobei ein Gewichtsverhältnis von 1,3-Dimethyl-2-imidazolidinon und dem/-n aromatischen Kohlenwasserstoff-Lösungsmittel(n) 1 : 0,03 bis 1 : 2,0 beträgt und ein Gewichtsverhältnis von 1,3-Dimethyl-2-imidazolidinon und Propylenglycoldiacetat 1 : 0,03 bis 1 : 2,0 beträgt.

## Revendications

1. Composition d'émulsion se composant essentiellement de :
0,5 à 25 % en poids d'un ou plusieurs composés agrochimiques hydrophobes actifs ayant une solubilité dans l'eau à pH 7,0 et 25 °C inférieure à 1000 ppm,
5 à 15 % en poids d'un ou plusieurs tensioactifs,
2 à 60 % en poids d'un ou plusieurs solvants hydrocarbonés aromatiques,
2 à 60 % en poids de diacétate de propylène glycol,
12 à 90 % en poids de 1,3-diméthyl-2-imidazolidinone, et
0 à 5 % en poids d'un ou plusieurs adjuvants de formulation,
dans laquelle un rapport en poids de la 1,3-diméthyl-2-imidazolidinone et du ou des solvants hydrocarbonés aromatiques est de l'ordre de 1:0,03 à 1:2,0, et
un rapport en poids de la 1,3-diméthyl-2-imidazolidinone et du diacétate de propylène glycol est de l'ordre de 1:0,03 à 1:2,0.

2. Composition d'émulsion selon la revendication 1, dans laquelle le rapport en poids de la 1,3-diméthyl-2-imidazolidinone et du ou des solvants hydrocarbonés aromatiques est de l'ordre de 1:0,05 à 1:1,5.

3. Composition d'émulsion selon la revendication 1, dans laquelle le rapport en poids de la 1,3-diméthyl-2-imidazolidinone et du diacétate de propylène glycol est de l'ordre de 1:0,05 à 1:1,5.

4. Composition d'émulsion selon la revendication 1, dans laquelle le ou les tensioactifs sont choisis dans le groupe constitué par les tensioactifs anioniques et les tensioactifs non ioniques.

5. Composition d'émulsion selon la revendication 4, dans laquelle le tensioactif anionique est un sulfonate d'alkylaryle.

6. Composition d'émulsion selon l'une quelconque des revendications 1 à 5, dans laquelle le composé agrochimique hydrophobe actif est un composé insecticide néonicotinoïde.

7. Composition d'émulsion selon la revendication 1, dans laquelle le composé agrochimique hydrophobe actif est un composé herbicide de sulfonylurée ou un composé herbicide de dicarboxyimide.

8. Solvant pour composés agrochimiques constitué par un ou plusieurs des solvants hydrocarbonés aromatiques, diacétate de propylène glycol et 1,3-diméthyl-2-imidazolidinone,
dans lequel un rapport en poids de la 1,3-diméthyl-2-imidazolidinone et du ou des solvants hydrocarbonés aromatiques est de l'ordre de 1:0,03 à 1:2,0, et
un rapport en poids de la 1,3-diméthyl-2-imidazolidinone et du diacétate de propylène glycol est de l'ordre de 1:0,03 à 1:2,0.

9. Dilution aqueuse par 10 à 5000 de la composition d'émulsion selon la revendication 1.

10. Utilisation d'un solvant constitué par un ou plusieurs des solvants hydrocarbonés aromatiques, diacétate de propylène glycol et 1,3-diméthyl-2-imidazolidinone, pour la dissolution des composés agrochimiques actifs ayant une solubilité dans l'eau à pH 7,0 et 25 °C inférieure à 1000 ppm,
dans laquelle un rapport en poids de la 1,3-diméthyl-2-imidazolidinone et du ou des solvants hydrocarbonés aromatiques est de l'ordre de 1:0,03 à 1:2,0, et
un rapport en poids de la 1,3-diméthyl-2-imidazolidinone et du diacétate de propylène glycol est de l'ordre de 1:0,03 à 1:2,0.
